# EUROPEAN PATENT SPECIFICATION

(11) **EP 2 821 934 B1**
(45) Date of publication and mention of the grant of the patent: **14.02.2024**
(21) Application number: 13174929.3
(22) Date of filing: 03.07.2013
(51) Int. Cl.: G06V 30/142, G06V 30/26

(54) **System and method for optical character recognition and document searching based on optical character recognition**
System und Verfahren zur optischen Zeichenerkennung und Dokumentsuche basierend auf optischer Zeichenerkennung
Système et procédé pour la reconnaissance optique de caractères et de recherche de documents sur la base de la reconnaissance optique de caractères

(43) Date of publication of application: 07.01.2015
(73) Proprietor: Open Text S.A., 2163 Luxembourg (LU)
(72) Inventor: Copsey, Simon, Horsham, West Sussex RH12 1SD (GB)
(74) Representative: Betten & Resch

(56) References cited:
- EP-A1- 2 439 676
- EP-A2- 1 411 460
- WO-A1-2009/115855
- WO-A1-2012/090033
- US-A1- 2005 286 493
- US-A1- 2006 142 054
- US-A1- 2012 274 803

## Description

### TECHNICAL FIELD

This disclosure relates generally to systems and methods for performing optical character recognition and using the results of such optical character recognition. Specifically, this disclosure relates to systems and methods for performing optical character recognition on a device and systems and methods for searching documents based on optical character recognition.
EP 1 411 460 A2 discloses a portable communication apparatus with a camera section for capturing an image depending on an operation of a shutter key and a character recognition section for recognizing characters from an captured image. A character-size adjustment indicator is provided on the display. The character-size adjustment indicator has a size which provides a sufficiently high success rate in character recognition when at least one character included in the captured image fits into the reference frame. A camera captures an image depending on operation of a shutter key. A character recognition section recognizes characters from the captured image. An image display unit has a character size adjustment indicator which indicates a high success rate in character recognition, when the character included in captured image matches with characters in reference image frame.
WO 2009/115855 A1 discloses a hand-held device for step-scanning a document by freely placing it on the document at multiple positions, said device shaped as horn with an ergonomic hand-held pack, comprising of a set of cascaded and rigidly attached identical imaging modules, an equal number of identical lenses mounted on the imaging modules at an appropriate height such that all of them have cascading fields of views horizontally, a high speed standard communication interface with a computer, made of material to allow imaging with the help of ambient or internal light, a single control button for snapping images simultaneously from all the modules and other control buttons for operations regarding preferred reading; a specially designed device driver/software to simultaneously acquire images from all the imaging modules, merge all the images by fixed translation parameters manually pre-calibrated in a software environment for seam-less joining of images as a mosaic in the horizontal direction, suitable for text reading by a standard OCR or generating a panoramic image of the under-placed document or picture; optionally removing incomplete lines at the top and bottom of the scan, optionally removing white space at both top and bottom including automatic new page detection, suitable for techniques automatically providing the continuity of various step-scans for images or text converted using a standard OCR in different passes, providing text or image output for speech or tactile reading, suitable for operation by the blind.

### SUMMARY OF THE INVENTION

The present invention is defined in the independent claims. The dependent claims defined embodiments of the present invention.

### BRIEF DESCRIPTION OF THE DRAWINGS

FIGURE 1 is a block diagram illustrating one embodiment of a topology for document searching, wherein the embodiment is not covered by the claimed invention but serves for a better understanding of the claimed invention.
FIGURE 2 is a block diagram illustrating one embodiment of a topology for document searching, wherein the embodiment is not covered by the claimed invention but serves for a better understanding of the claimed invention.
FIGURE 3 is a flow diagram illustrating one embodiment of a method for document searching, wherein the embodiment is not covered by the claimed invention but serves for a better understanding of the claimed invention.
FIGURE 4 is a block diagram illustrating one embodiment of a topology for on-device OCR.
FIGURE 5 is a flow diagram illustrating one embodiment of a method for on-device OCR.
FIGURE 6 is a depiction of an example document.
FIGURE 7 is a block diagram illustrating one embodiment of a topology for document searching.

### DETAILED DESCRIPTION

Embodiments can be implemented in a computer communicatively coupled to a network (for example, the Internet, an intranet, an internet, a WAN, a LAN, a SAN, etc.), another computer, or in a standalone computer. As is known to those skilled in the art, the computer can include a central processing unit ("CPU") or processor, at least one read-only memory ("ROM"), at least one random access memory ("RAM"), at least one hard drive ("HD"), and one or more input/output ("I/O") device(s). The I/O devices can include a keyboard, monitor, printer, electronic pointing device (for example, mouse, trackball, stylist, etc.), or the like. In embodiments, the computer has access to at least one database over the network. In an embodiment, the database may be located on the same physical hardware as a platform server, and may be accessed locally through protocols such as but not limited to open database connectivity (ODBC).

ROM, RAM, and HD are computer memories for storing computer-executable instructions executable by the CPU or capable of being complied or interpreted to be executable by the CPU. Within this disclosure, the term "computer readable medium" is not limited to ROM, RAM, and HD and can include any type of data storage medium that can be read by a processor. For example, a computer-readable medium may refer to a data cartridge, a data backup magnetic tape, a floppy diskette, a flash memory drive, an optical data storage drive, a CD-ROM, ROM, R_AM, HD, or the like. The processes described herein may be implemented in suitable computer-executable instructions that may reside on a computer readable medium (for example, a disk, CD-ROM, a memory, etc.). Alternatively, the computer-executable instructions may be stored as software code components on a DASD array, magnetic tape, floppy diskette, optical storage device, or other appropriate computer-readable medium or storage device.

In one exemplary embodiment, the computer-executable instructions may be lines of C++, Java, JavaScript, or any other programming or scripting code. In an embodiment, HTML may utilize JavaScript to provide a means of automation and calculation through coding. Other software/hardware/network architectures may be used. For example, the functions of embodiments may be implemented on one computer or shared among two or more computers. In one embodiment, the functions may be distributed in the network. Communications between computers implementing embodiments can be accomplished using any electronic, optical, radio frequency signals, or other suitable methods and tools of communication in compliance with known network protocols.

Additionally, the functions of the disclosed embodiments may be implemented on one computer or shared/distributed among two or more computers in or across a network. Communications between computers implementing embodiments can be accomplished using any electronic, optical, radio frequency signals, or other suitable methods and tools of communication in compliance with known network protocols. It will be understood for purposes of this disclosure that a module is one or more computing devices, computing processes or both, configured to perform one or more functions. A module may present one or more interfaces which can be utilized to access these functions. Such interfaces include APIs, web services interfaces presented for a web services, remote procedure calls, remote method invocation, etc.

Before delving into more detail regarding the specific embodiments disclosed herein, some brief context may be helpful. While the technology utilized today has led to widespread use of electronic documents in certain environments, paper documents have not been completely exorcised. As a result, in many environments both electronic documents and paper documents may be utilized. The simultaneous use of paper and electronic documents has imposed an inconvenient and oft-clumsy segregation with respect to the searching of such documents.

To illustrate, there may be a wide variety of ways in which to search electronic documents. For example, in many cases electronic documents may be managed by a content management system which provides an interface that may be utilized to search those documents (e.g., by keywords, content, etc.). Additionally, electronic documents that may reside at multiple disparate locations may be indexed and the index of those documents used to search document. Thus, once a desired electronic document is obtained (e.g., through searching or otherwise) the content of that electronic document may be used to search other electronic documents for other electronic documents that may be similar (e.g., with respect to terms contained, content, etc.).

Paper documents may also be searched. In many cases, paper documents may be organized (alphabetized, catalogued according to an organizational system, etc.) such that those paper documents may be searched or otherwise located. Again, then, once a desired paper document is obtained (e.g., through searching or otherwise) the content of that paper document may be used to search other paper documents that may be similar (e.g., through manual searching of those paper documents).

In environments that utilize both paper documents and electronic documents it is often times desired to find electronic documents based on a paper documents. Currently, the only way to perform such a search is to manually review a paper document and use a provided search interface to manually perform a search of the electronic documents based on the manual review of the paper documents.

What is desired then, are systems and methods that allow electronic documents to be searched based on paper documents. In essence, a more seamless connection between physical paper documents and the ability to search, find, and utilize corresponding or associated electronic documents.

To that end, attention is directed to the embodiments of the systems and methods for document searching presented herein. Specifically, embodiments as disclosed allow the searching of electronic documents based on a paper document. Images of a paper document (or a portion thereof) is captured on a mobile device. Optical character recognition (OCR) is performed on the image to determine text of the image of the paper document according to claim 1. Based on the determined text a set of search terms is determined and a search performed on a set of electronic documents using these search terms. The results of the search is then returned.

The results, which is a set of documents responsive to the search, may be returned in a variety of ways. For example, in certain embodiments the electronic documents found through the search may be returned to the device on which the image was captured and displayed in a list. Alternatively, a set of links to the documents (e.g., in a content server or at the locations at which the documents reside may be returned and displayed to the user of the device.

Moreover, in one embodiment, the results of the search may be displayed in conjunction with the image of the paper document on the device (e.g., as a list, set of links, initial sentence of each electronic document, etc. overlaid on top of the image on the screen at the user's device). Using embodiments such as these then, an interactive search that may be substantially continuously updated based on the image a user is currently viewing may be implemented.

As may be realized, mobile computing devices (or just mobile devices) such as cellular phones, smart phones, laptops, PDA's, etc., are increasingly the way users conduct a wide variety of their interactions. As such many of the images used to perform embodiments as presented herein may be captured and processed on a mobile device. However, currently a number of impediments to doing OCR on mobile devices exist, including, for example, relatively inferior camera performance or sensors (e.g., poor low light performance), the ability of the camera (or other image capture device) on most mobile devices to capture images where the entire image is in focus, the ability of current OCR technologies to deal with images that are skewed or rotated and the large processing power required to perform OCR on a captured image. Thus, currently, performing OCR of a document on a mobile device may take an inordinately long time or may fail altogether.

Despite these impediments, however, it is still desired to perform image capture and OCR on mobile devices. Accordingly, systems and methods to implement OCR on a mobile device are presented herein. Specifically, a set of images of a document is captured, where each image is a portion of the document. OCR is performed on each of these images and the text resulting from performing OCR on each of the images is joined to form an overall text corresponding to the images of those portions of the document according to claim 1. Thus, a single overall text for a document is generated more efficiently by performing OCR on images of a set of portions of the document and joining them together.

In particular, by performing OCR on images that are themselves only portions of a document issues with respect to lighting and focus of the image when performing such OCR may be considerably reduced (e.g., the text of the images may be much bigger). Moreover, the time to OCR images of portions of a document would also be significantly less than performing OCR of an entire document (for example, as a result of the reduction of the aforementioned issues

In one embodiment, when the text corresponding to each image of each portion is obtained by OCR the resulting text may be further joined by performing language processing (e.g., natural language processing) techniques to analyse the texts obtained from the images to determine how they are to be joined. For example, overlapping text in different images may be used to determine which text should be joined and where. Additionally, in some embodiment, in a similar manner to how predictive text on mobiles works, with an appropriate language database on the device, text from the images could be further joined by evaluating probability of text from different images matching.

Motion data according to claim 1 is obtained from the accelerometer on the mobile device and is used to determine a direction of movement of the mobile device when the set of images were captured This motion data is used when joining the text obtained from the set of images

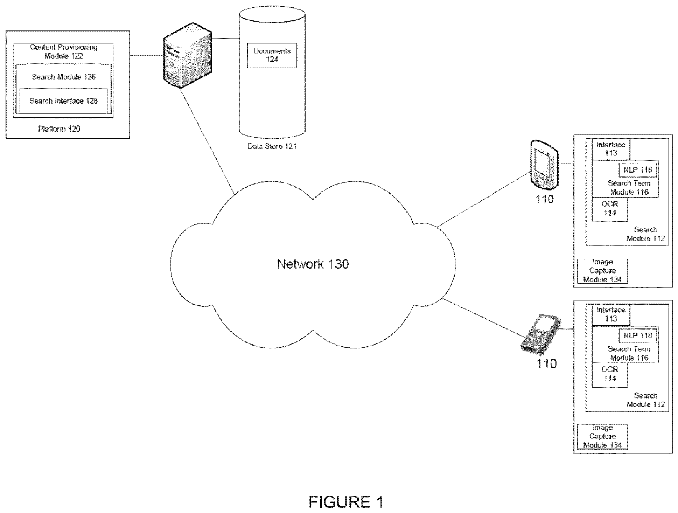

It may now be helpful here to discuss embodiments of various topologies that may be utilized in performing embodiments as disclosed herein. Referring first to FIGURE 1, one embodiment of topology for document searching is depicted, wherein the embodiment of FIGURE 1 is not covered by the claimed invention but serves for a better understanding of the claimed invention. The topology includes one or more computing devices 110 connected to a content provisioning platform 120 over a network 130. The network 130 may be a wired or wireless network such as the Internet, an intranet, a LAN, a WAN, a cellular network, another type of network. It will be understood that network 130 may be a combination of multiple different kinds of wired or wireless networks.

Platform 120 may include one or more content provisioning modules 122 accessible at one or more locations (e.g., IP addresses or domain names) or through one or more interfaces. The modules of a particular platform 120 may be deployed on physical computing devices residing at a particular location (such as those associated with the provider of a particular mobile application) or may be deployed in a cloud. Thus, when a platform 120 is deployed in the cloud, one or more content provisioning modules 122 may be executing on a virtual machine provided in the cloud, where the virtual machine is addressable at a single (or more) location(s).

Regardless of the location of the platform 120, the content provisioning module 122 of a platform 120 may support access from a computing device 110. In other words, users at computing devices 110 may use their computing device 110 to access content provisioning module 122 using for example, a browser or other application on the computing device 110, a proprietary application on computing device, a generic interface, etc. In response to such access, content provisioning module 122 may provide data from data store 121 to the accessing computing device 110. This data may include documents 124, including for example, files in a proprietary format (e.g., Adobe .pdf, Microsoft Word, Excel, Power Point), files in a generic open format (e.g., mp3, mpeg, jpeg, etc.) files in a markup langue (XML, HTML etc.) or practically any other type of file. Thus, for example, content provisioning module 122 may be a content management system that provides access, control and management of documents 124 in data store 121.

Accordingly, content provisioning module 122 may include search module 126 including search interface 128 to allow for searching of such documents 124. Search interface 128 may be accessible (e.g., at a particular URL, through an API or web services interface, etc.) such that a query including one or more search terms may be provided through the search interface 128. The search module 126 may search the documents 124 based on the query provided through the search interface 126 to determine a set of results responsive to the query, where these results may be associated with a set of documents responsive to the query. These results can then be returned by the search interface 128 in response to the query.

Computing devices 110 are mobile devices (such as smartphones, laptop computers, personal data assistants (PDAs), etc.), desktop computers, servers, or other computing platforms, or any other type of device that can process instructions and connect to network 130. Each computing device includes an image capture module 134 and a search module 112.

Image capture module 134 may have access a lens or other aperture on a device configured to receive or capture images using the light received through the aperture. For example, many mobile computing devices include a cameras lens or the like and an associated image capture capability which the image capture module 134 can leverage. Thus, image capture module 134, when utilized, receives image data (with or without direct user involvement) through the aperture of the device 110 and captures or otherwise provides these images.

Search module 112 may include interface 113, OCR module 114 and search term module 116. Interface 113 may have access to one or more input or output modules (e.g., a screen, buttons, speakers, etc.) on device 110 and be configured to provide output or receive input through these input or output modules of the device 110. Interface 113 may also be configured to utilize other interfaces such as APIs, web service interfaces, etc. to send requests and receive responses to those requests.

Specifically, in one embodiment, which is not covered by the claimed invention but serves for a better understanding of the claimed invention, interface 113 may be configured to be accessed by a user such that the image currently being received by image capture module 134 is displayed on the screen of the mobile computer device 110. In one embodiment, which is not covered by the claimed invention but serves for a better understanding of the claimed invention, interface 113 may then allow a user to indicate that an image (e.g., the image currently being received by the image capture module) is to be used for a search when activated by a user (e.g., when the user selects a particular button or touches a screen in a particular place, etc.). Interface 113 may also be configured to present the results of a search to a user (e.g., in conjunction with an image being displayed to the user or in another type of interface altogether).

OCR module 114 is configured to perform OCR on an image, where the results of the OCR of an image is text corresponding to that image. In one embodiment (not covered by the claimed invention but serving for a better understanding of the claimed invention), for example, such an OCR module may be an ABBYY OCR module or the like.

Search term module 116 is configured to determine one or more search terms from text. Search term module 116 may include a natural language processor (NLP) module 118 or the like configured to remove stop words from the text, determine key words or phrases, performing key word or term weighting, etc. Thus, search term module 116 determines a set of search terms from text by, for example, using all the text (e.g., each term of the text is a search term, or the entire text is one search term), using a set of key words or phrases determined form the text, using the words of the text after removal of stop words or by determining the set of search terms in some other manner.

Search module 112 is thus configured to be activated and to access image capture module 134 to obtain images (e.g., image data) from image capture module 134 and provide these images to interface 113 to be presented to the user. Search module 112 is also configured to receive an indication that a user wishes to use an image currently being displayed for a search. The search module 112 is thus configured to provide the image to OCR module 114, receive the text associated with the image from the OCR module 114, provide the text to search term module 116, receive the search terms from search term module 116, use interface 113 to provide the search terms to search module 126, receive the results of the search from interface 113 and present the results of the search using interface 113.

Accordingly, a user of computing device 110 may wish to perform a search of documents 124 and activate search module 112 on computing device 110. Search module 112 may then activate image capture module 134 on the device 110 and present the image being received by image capture module 134 to the user through interface 113. The user may then point the device at a portion of a document (e.g., an entire document or less than the entire document) and indicate through interface 113 (e.g. by pressing a button) that the image being currently presented through the interface 113 is to be captured and used for a search.

Search module 112 may then receive the image currently being displayed through the interface 113 using image capture module 134 and provide the image to OCR module 114. OCR module 114 may then perform OCR on the captured image to determine text from the image. Search module 112 may then determine a set of search terms from the determined text. In one embodiment (not covered by the claimed invention but serving for a better understanding of the claimed invention), to determine a set of search terms from the text determined from the image, the text may be provided to search term module 116 which may utilize NLP module 118 to determine one or more words or phrases from the determined text. Such determinations may be made, for example, based on frequency, term weighting, removal of stop words or other NLP techniques.

Term weighting techniques, for example, include those known in the art such as term frequency-inverse document frequency (TF-IDF) involving numerical statistics which reflect an importance of a term to a particular document in a document group. Search engines can use TF-IDF as a tool to score and rank term relevance. TF-IDF may include a value that increases proportionally to the number of times a word appears in a document, offset by term frequency in a document group.

Stop-word processing may be used alone or in conjunction with TF-IDF to filter out certain terms or phrases prior to NLP. NLP techniques are further well-known in the art and include, but are not limited to, automatic summarization, co-reference resolution, discourse analysis, machine translation, morphological segmentation, named entity recognition, generation techniques, part-of-speech tagging, parsing techniques, relationship extraction, sentence breakdown, sentiment analysis, topic and speech segmentation, word segmentation, word sense disambiguation, etc.

Once the set of search terms are determined, search module 112 may use interface 113 to provide these search terms to search interface 128 of search module 126 of content provisioning module 122. For example, the search terms may be provided to the search module 126 through search interface 128 using an API or web services interface provided by search interface 128. Search module 126 may then utilize the provided search terms to search the documents 124 to obtain a set of search results, where the search results are associated with documents 124 responsive to the search. These results may be returned to interface 113 through search interface 128 of search module 126 (e.g., in response to the API or web services call received from interface 113). The results returned may, for example, be copies of the documents 124 located through the search (or a subset thereof, such as the top 10 most closely matched documents, etc.). Alternatively, an identifier (e.g., URL, token, document number, etc.) that may be utilized to locate documents 124 responsive to the search may be returned as a search result, etc.

When the results are received by interface 113 they are presented to the user at the device 110. For example, a list of the titles or links to each document returned as a search result (or a subset thereof) may be presented allowing a user to select the title and view the corresponding document (e.g., by accessing the document stored on device 110 or by accessing content provisioning module 120 with an identifier of the desired document, etc.). Moreover, in certain embodiments (not covered by the claimed invention but serving for a better understanding of the claimed invention) the results of may be displayed through interface 113 in conjunction with the image of the paper document on the device that was utilized in the search (e.g., as a list, set of links, initial sentence of each electronic document, etc. overlaid on top of the image on the screen at the user's device 110).

It should be noted here that while certain examples of presenting the results of a search are discussed and presented herein, other configurations for presenting the results of a search may be possible and such configurations are likewise contemplated by this disclosure.

For example, in certain embodiments (not covered by the claimed invention but serving for a better understanding of the claimed invention), an interactive search that may be substantially continuously updated based on the image a user is currently viewing may be implemented. As an example, in one embodiment (not covered by the claimed invention but serving for a better understanding of the claimed invention), as a user moves his device over different portions of the paper document, and a portion of the paper document is displayed to the user on the user's device, a search is performed based upon the current portion of the paper document being displayed on the user's device. The results are displayed to the user in conjunction with that portion of the document being currently displayed (e.g., overlaid on top of the image of that portion of the document on the screen). Thus, as the user moves his device over different portions of the document the search results indicating electronic documents associated with those different portions may be shown to the user and substantially constantly updated as the user moves his device to those different portions.

In such embodiments (not covered by the claimed invention but serving for a better understanding of the claimed invention), a user of computing device 110 may wish to perform a search of documents 124 and activate search module 112 on computing device 110. Search module 112 may then activate image capture module 134 on the device 110 and present the image being received by image capture module 134 to the user through interface 113. Search module 112 may then receive the image currently being displayed through the interface 113 using image capture module 134, provide the image to OCR module 114, use interface 113 to provide these search terms to search module 126, receive the search results through interface 113 and present the results through interface 113.

The image currently being displayed through the interface 113 may then again be captured using image capture module 134 and used to search documents 124 and display an updated set of search results through interface 113. In this manner, as the user moves the device 110 over a paper document the user may be displayed search results that are substantially associated with the portion of the document currently being displayed to the user.

It should also be noted that OCR may be accomplished on mobile computing devices in conjunction with document searching based on paper document, or OCR may be performed in other locations.

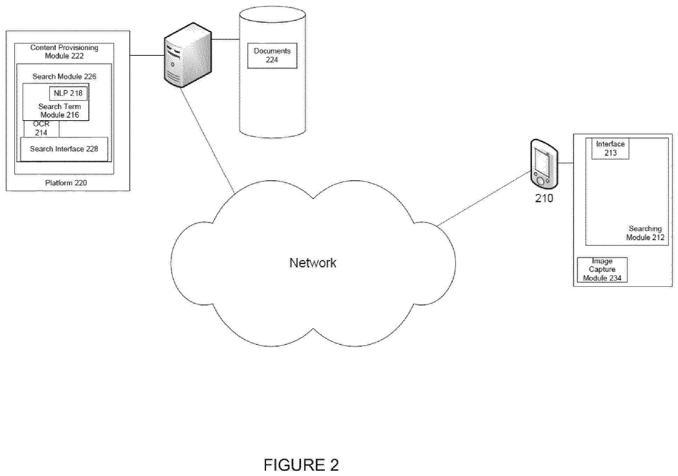

FIGURE 2 depicts one embodiment of topology for document searching where OCR is performed on a location other than the mobile device 210, wherein the embodiment of FIGURE 2 is not covered by the claimed invention but serves for a better understanding of the claimed invention. Here, search module 226 at platform 220 may include search interface 228, search term module 216 and OCR module 214. In this embodiment, search interface 228 may be configured to receive (e.g., at a particular URL, through an API or web services interface, etc.) a query including one or more images. The search module 226 may thus be configured to use OCR module 214 to perform OCR on the received image to generate text corresponding to the image and to use search term module 216 to determine one or more search terms from this text. Search module 226 can then search the documents 224 based on these search terms to determine a set of results responsive to the query. These results can then be returned through the search interface 228 in response to the query.

Similarly then, search module 212 may include interface 213, where interface 213 may be configured to be accessed by a user of the mobile device 210 such that the image currently being received by image capture module 234 are displayed on the screen of the mobile computer device 210. In one embodiment (not covered by the claimed invention but serving for a better understanding of the claimed invention), then, interface 213 may allow a user to indicate that an image (e.g., the image currently being received by the image capture module) is to be used for a search when activated by a user (e.g., when the user selects a particular button or touches a screen in a particular place, etc.). Interface 213 may also be configured to present the results of a search to a user (e.g., in conjunction with an image being displayed to the user or in another type of interface altogether).

Search module 212 is thus configured to be activated and to access image capture module 234 to obtain images (e.g., image data) from image capture module 234 and provide these images to interface 213 to be presented to the user. Search module 212 is also configured to receive an indication that a user wishes to use an image currently being displayed for a search. The search module 212 is thus configured to use interface 213 to provide the image to search module 226 using search interface 228, receive the results of the search from interface 213 and present the results of the search using interface 213.

Accordingly, a user of computing device 210 may wish to perform a search of documents 224 and activate search module 212 on computing device 210. Search module 212 may then activate image capture module 234 on the device 210 and present the image being received by image capture module 234 to the user through interface 213. The user may then point the device at a portion of a document (e.g., an entire document or less than the entire document) and indicate through interface 213 (e.g. by pressing a button) that the image being currently presented through the interface 213 is to be captured and used for a search.

Search module 212 may then receive the images currently being displayed through the interface 213 using image capture module 234. Search module 212 may use interface 213 to provide the image to search interface 228 of search module 226 of content provisioning module 222. For example, the image may be provided to the search module 226 through search interface 228 using an API or web services interface provided by search interface 228.

The image may be received at search module 226 through search interface 228. Search module 226 may then provide the image to OCR module 214. OCR module 214 may perform OCR on the captured image to determine text from the image. Search module 226 may receive the text and provide the text to search term module 216 to determine a set of search terms from the determined text. In one embodiment (not covered by the claimed invention but serving for a better understanding of the claimed invention), to determine a set of search terms from the text, the text may be provided to NLP module 218 to determine one or more words or phrases from the text.

Once the set of search terms are determined, search module 226 utilizes the search terms to search the documents 224 to obtain a set of search results, where the search results are associated with documents 224 responsive to the search. These results are returned to interface 213 through search interface 228 of search module 226 (e.g., in response to the API or web services call received from interface 213). When the results are received by interface 213 they are presented to the user at the device 210 as discussed above.

As can be seen then, documents may be searched based on a paper document by performing OCR on a portion of the paper document and using the resulting text to search the documents, regardless of where the OCR is performed.

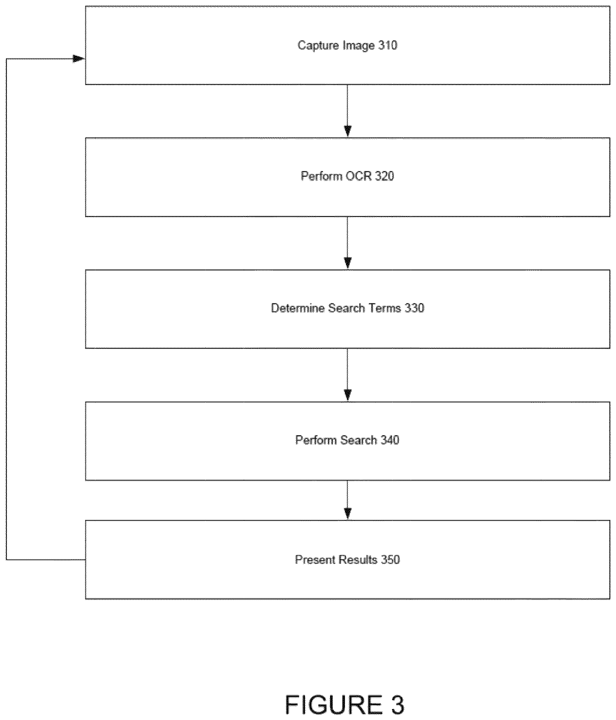

Referring now to FIGURE 3, one embodiment of a method for searching electronic documents based on paper documents using OCR is depicted, wherein the embodiment of FIGURE 3 is not covered by the claimed invention but serves for a better understanding of the claimed invention.
Initially, at step 310 an image is captured on a computing device. This capture may be the reception of the image (e.g., image data) corresponding to the image being received through an image capture device such as a camera or the like on the computing device. The image may be of a portion of a paper document that is to be used to perform the search.

At step 320 OCR is performed on the captured image. Performing OCR on the captured image may result in text associated with the image of the portion of the paper document (e.g., text that was included in the captured image). Using the text resulting from the OCR of the captured image, a set of search terms is determined at step 330. These search terms may, for example, be determined using NLP techniques or the like to remove stop words from the text, determine key words or phrases, performing key word or term weighting, etc. Thus, the set of search terms may be determined from the text by, for example, using all the text (e.g., each term of the text is a search term, or the entire text is one search term), using a set of key words or phrases determined form the text, using the words of the text after removal of stop words or by determining the set of search terms in some other manner.

A set of electronic documents is then searched based on the set of search terms at step 340. It will be realized that the set of documents may be searched based on an index of those documents or the documents themselves may be searched or some other method may be used to search the documents. Thus, embodiments as presented herein may be utilized with equal efficacy in cases where documents are resident in one or more databases such as a database system or content management system or in cases where documents are distributed across a network and an index of such documents is maintained such as in an Internet or internet search engine, etc.

Once the search is performed, the results of that search are presented at step 350. For example, a list of the titles or links to each document returned as a search result (or a subset thereof) may be presented through a display of the computing device in a manner that allows a user to select the title and view the corresponding document. Moreover, in certain embodiments (not covered by the claimed invention but serving for a better understanding of the claimed invention) the results of the search may be displayed through an interface in conjunction with the image of the paper document on the device that was utilized in the search (e.g., as a list, set of links, etc.). In one embodiment (not covered by the claimed invention but serving for a better understanding of the claimed invention), another image may then again be captured at step 310 and used to search documents such that the method is repeated and the search results updated. The steps may be repeated and the search results updated until, for example, the user selects a particular document of the search results to view or otherwise indicates an end to the search.

As discussed above, the images may be captured and processed on a mobile device. However, currently a number of impediments to doing OCR on mobile devices exist, including, for example, relatively inferior camera performance or sensors, the ability of current OCR technologies to deal with images that are skewed or rotated, the large processing power required to perform OCR on a captured image etc. Thus, in many cases performing OCR of a document on a mobile device may take an inordinately long time or may fail altogether.

Despite these impediments, however, it is still desired to perform image capture and OCR on mobile devices. Accordingly, systems and methods to implement OCR on a mobile device are presented herein. Specifically, a set of images of a document is captured, where each image is a portion of the document, where the portion is less than the entire document. OCR is performed on each of these images and the text resulting from performing OCR on each of the images joined to form an overall text corresponding to the images of those portions of document. Thus, a single overall text for a document is generated more efficiently by performing OCR on images of a set of portions of the document and joining them together.

In one embodiment, when the text corresponding to each image of each portion is obtained by OCR the resulting text may be joined by performing language processing (e.g., natural language processing) techniques to analyse the texts obtained from the images to determine how they are to be joined. For example, overlapping text in different images may be used to determine which text should be joined and where.

In some non-limiting embodiments, joining and overlapping text can be determined by searching for commonly found terms/words in different portions of OCR text. Commonly found terms can include matching words, phrases, numbers, characters, symbols and/or tokens such as the sentence tokens such as commas, periods, etc. In some more specific embodiments, a starting text can be identified in a first document and/or OCR portion such that the starting text may be searched for in a second document portion and/or OCR portion by searching each identified text from the second document portion (i.e., a word-by-word comparison search). Upon discovery of a match, a further match can be extended by searching for matching surrounding words. The number of iterations in a surrounding word search may be predetermined. Different portions of texts may be searched as such until a match is found sufficient to join the texts or until all possible text portion combinations are compared.

Additionally, in some embodiment, in a similar manner to how predictive text on mobiles works, with an appropriate language database on the device, text from the images could be joined by evaluating or determining a probability of texts from different images matching.

Additionally, other data that may be obtained from the mobile device may be used to inform the joining process. According to the claimed invention, motion data, associated with the set of images, from the accelerometer on the mobile device is used to determine a direction of movement of the mobile device when the set of images were captured. This motion data is used when joining the text obtained from the set of images and further improves both the results and the speed of the joining process. The motion data associated with the set of images indicates an order of the images. Documents can be identified for further processing based on relative movements of pixels on the screen, in some cases a group of pixels identified as corresponding to a distinct document. Relative movements may take into account angular dispositions (i.e., from different oblique views), relative dimensional movements, etc.

According to the claimed invention, the accelerometer is used to determine device travel as well as device rotation in order to map such information to a different set of captured images so that such data is then used to analyse and form a basis for document recognition.

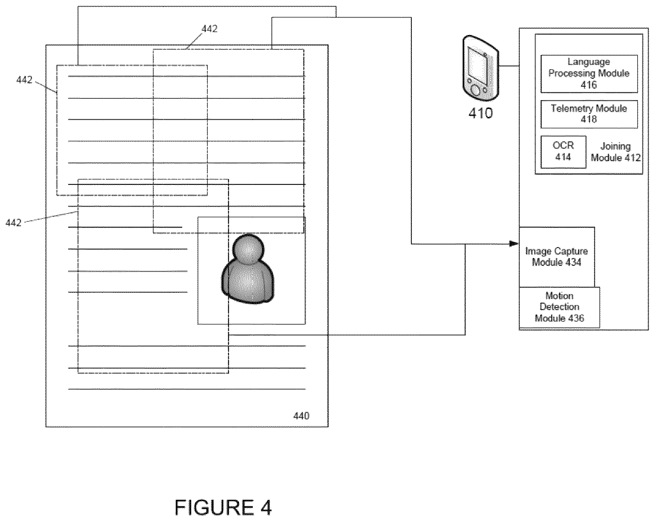

It may now be helpful here to discuss embodiments of various topologies that may be utilized in performing embodiments as disclosed herein. Referring now to FIGURE 4, one embodiment of a mobile device 410 configured to perform OCR is depicted. Mobile device 410 includes image capture module 434, motion detection module 436 and joining module 412.

Image capture module 434 may access a lens or other aperture configured to receive or capture images using the light received through the aperture, as discussed above. Motion detection module 436 is a device configured to detect motion and direction data associated with movement of mobile device 410, with the assistance of an accelerometer.

Joining module 412 may include OCR module 414, language processing module 416 and telemetry module 418. OCR module 414 is configured to perform OCR on an image, where the results of the OCR of an image is text corresponding to that image.

Language processing module 416 may be configured to perform language processing (e.g., natural language processing) techniques to analyse how, and if, text is to be joined. For example, overlapping text (e.g., words, phrases, portions of words or phrases, numbers, etc.) in the text obtained from different images may be used to determine which texts should be joined and where these texts should be joined. For example, the language processing module 416 may be configured to perform the search and evaluation techniques as described above. Additionally, in some embodiment, in a similar manner to how predictive text on mobiles works (e.g., using an appropriate language database) language processing module 416 may determine a probability of a match between two texts by analysing the likelihood of one text (or portion thereof) following another text (or portion thereof).

Telemetry module 418 is configured to receive or determine motion and direction data (collectively motion data) associated with images received at joining module. Telemetry module 418 utilizes motion data received directly from motion detection module 436 in conjunction with an image. The telemetry module 418 is configured to determine, based on the motion data, an order of the images received at joining module 412.

Joining module 412 is thus be configured to receive a set of images 442 associated with a document 440 from image capture module 434 along with motion data associated with the images from motion detection module 436. Joining module 412 is further configured to provide such images to OCR module 414 to obtain text associated with each of the images. Joining module 412 may then be configured to use language processing module 416 to determine which of the texts to join (if any) and where to join the text. Joining module 412 uses motion data from telemetry module 416 corresponding to the images from which the texts were obtained to determine which of the text to join or where to joining the texts.

Once joining module 412 has determined which texts are to be joined and where those texts are to be joined, joining module 412 joins the texts to produce a single overall text corresponding to images 442 from the document 440. When joining the texts (e.g., at least two of the texts), joining module 412 may not utilize all the texts, may utilize only portions of certain texts, may remove duplicative (e.g., overlapping) text, etc.

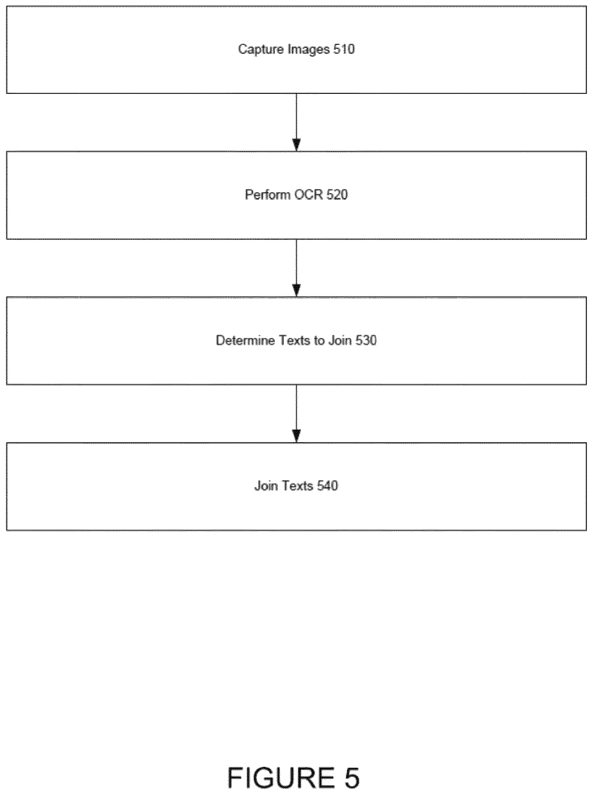

One embodiment of a method for performing OCR on devices using multiple images is depicted in FIGURE 5. Initially at step 510 a set of images is captured form a document. This capture may be the reception of images (e.g., image data) corresponding to the images being received through an image capture device such as a camera or the like on the computing device. The images received may be captured based on input from the user (e.g., the user may point the computing device and select when an image is to be captured) or may be captured at certain intervals as, for example, a user moves the device over the document.

At step 520 OCR is performed on the captured images. Performing OCR on the captured image results in a text associated with each capture image. At step 530 a determination is made which of those texts are to be joined together. This determination can be made, in one embodiment, by analyzing each of the texts to determine portions of the texts (e.g., words, phrases, numbers, etc.) that overlap (e.g., are the same or are a part of the same word, phrase or number, etc.). This analysis may also take into account the overlap between texts that occur at different lines of the text (e.g., an overlap between two texts may occur at multiple places and on multiple lines of the texts).

The determination of which texts are to be joined is made based on motion data. For example if it can be determined that a device was moving from left to right when image 1 and image 2 were taken, the text resulting from the OCR of image 1 should be joined to the text resulting from the OCR of image 2.

Additionally, predictive linguistics may be used to determine which texts should be joined. Such predictive linguistics may be used, for example, to determine a likelihood that a word or phrase of one text would follow a word of phrase of another text.

Once a determination is made which texts should be joined, these texts are joined at step 540. This joining process may join texts in such a way that duplicative text may be removed and at least two of the texts (or portions thereof) joined to form a single overall text corresponding to the captured images.

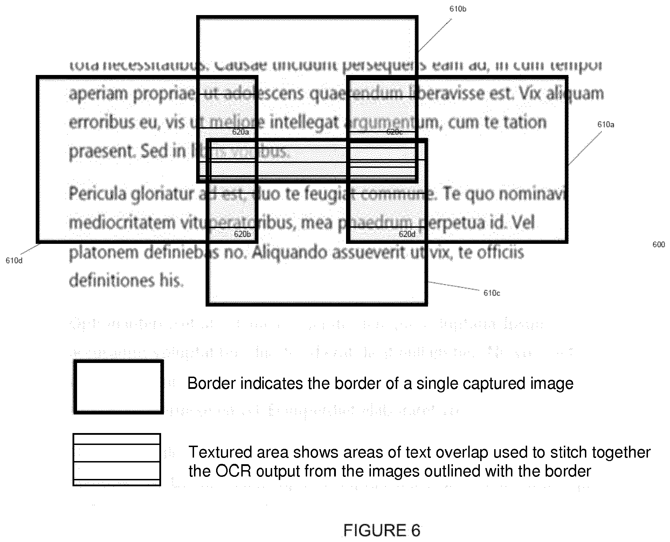

The joining of texts obtained from different images taken from the same document may be better understood with reference to FIGURE 6. In the example illustrated, images 610 may be captured from document 600. Areas 620 may include overlapping text that may be obtained from each of these images 610 that may be used to determine which texts to join. For example, notice that image 610a incudes the text "t commune. Te quo nominavi" and "haedrum perpetua id. Vel" while image 610c includes the text "d est, duo te feugiat commun" and "peratoribus, mea phaedrum p". Thus, as depicted in area 620d the text of image 610c and the text of image 610a may be determined to comprise the overlapping text "t commun" and "haedrum p". Accordingly, it can be determined that the text from these images 610a, 610c should be joined based on this overlapping text and when the text of the images 610a, 610c are joined it may result in the text "d est, duo te feugiat commune. Te quo nominavi" and "peratoribus, mea phaedrum perpetua id. Vel".

Similarly, then, an OCR of image 610d includes the text "Pericula gloriatur ad est," and "mediocritatem vituperato" while image 610c includes the text d est, duo te feugiat commun" and "peratoribus, mea phaedrum p". Thus, as depicted in area 620b the text of image 610d and the text of image 610c may be determined to comprise the overlapping text "d est," and "perato". Accordingly, it can be determined that the text from these images 610d, 610c should be joined based on this overlapping text and, when the text of the images 610d, 610c are joined it may result in the text "Pericula gloriatur ad est, duo te feugiat commun" and "mediocritatem vituperatoribus, mea phaedrum p". Furthermore, as discussed above, it may have been determined that the text from images 610c and 610a should also be joined based on overlapping text within those images. As such, when the text from image 610d is joined to the text from image 610c and the text from image 610c is joined to the text from image 610a it may result in the text "Pericula gloriatur ad est, duo te feugiat commune. Te quo nominavi" and "mediocritatem vituperatoribus, mea phaedrum perpetua id. Vel".

Examples of text that may be used to join text of image 610d to text of image 610b is depicted in area 620a and examples of text that may be used to join text of image 610b to text of image 610a is depicted in area 620c.

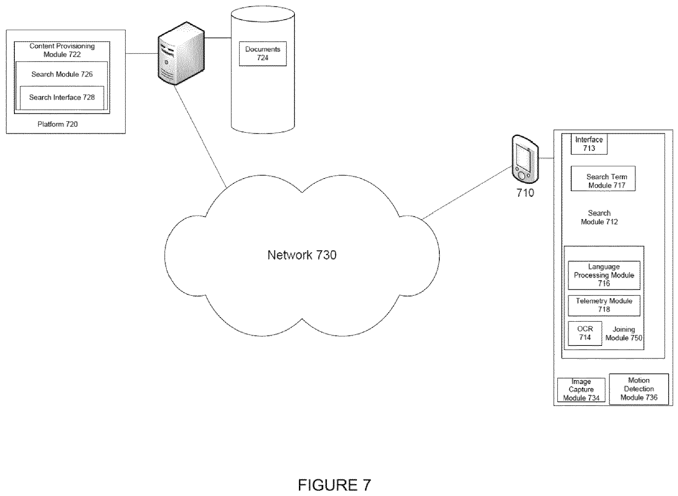

As can be seen then, certain embodiments may provide improved methods for performing OCR on computing devices. Such embodiments may be usefully applied in systems and methods for document searching. FIGURE 7 depicts one embodiment of a topology for document searching that includes the joining of texts. The topology includes one or more computing devices 710 connected to a content provisioning platform 720 over a network 730. The network 730 may be a wired or wireless network such as the Internet, an intranet, a LAN, a WAN, a cellular network, another type of network. It will be understood that network 730 may be a combination of multiple different kinds of wired or wireless networks.

Platform 720 may include one or more content provisioning modules 722 accessible at one or more locations (e.g., IP addresses or domain names) or through one or more interfaces. The content provisioning module 722 of a platform 720 may support access from a computing device 710. Content provisioning module 722 may include search module 726 including search interface 728 to allow for searching of such documents 724. Search interface 728 may be accessible (e.g., at a particular URL, through an API or web services interface, etc.) such that a query including one or more search terms may be provided through the search interface 728. The search module 726 may search the documents 724 based on the query provided through the search interface 726 to determine a set of results responsive to the query. These results can then be returned by the search interface 728 in response to the query.

Each computing device includes an image capture module 734, motion detection module 736 and a search module 712. Image capture module 734 may include a lens or other aperture and be configured to receive or capture images using the light received through the aperture. For example, many mobile computing devices include a cameras lens or the like and an associated image capture module. Thus, image capture module 734 may, when utilized, receive image data (with or without direct user involvement) through the aperture of the device 710 and capture or otherwise provide these images. Motion detection module 736 is a device configured to detect motion and orientation data associated with movement of mobile device 710, such as an accelerometer.

Search module 712 may include interface 713, joining module 750 and search term module 717. Interface 713 may have access to one or more input or output modules (e.g., a screen, buttons, speakers, etc.) on device 710 and be configured to provide output or receive input through these input or output modules of the device 710. Interface 713 may also be configured to utilize other interfaces such as APIs, web service interfaces, etc. to send requests and receive responses to those requests.

Specifically, in one embodiment, interface 713 may be configured to be accessed by a user such that the image currently being received by image capture module 734 is displayed on the screen of the mobile computer device 710. In one embodiment, not covered by the claimed invention but serving for a better understanding of the claimed invention, then, interface 713 may allow a user to indicate that images (e.g., images captured while a user is moving the device 710 over the document) is to be used for a search when activated by a user (e.g., when the user selects a particular button or touches a screen in a particular place, etc.). Interface 713 may also be configured to present the results of a search to a user (e.g., in conjunction with an image being displayed to the user or in another type of interface altogether).

Search term module 717 is configured to determine one or more search terms from text. Search term module 717 may utilize, for example, language processing module 716 or the like configured to remove stop words from the text, determine key words or phrases, performing key word or term weighting, etc. Thus, search term module 717 may determine a set of search terms from text by, for example, using all the text (e.g., each term of the text is a search term, or the entire text is one search term), using a set of key words or phrases determined form the text, using the words of the text after removal of stop words, or by determining the set of search terms in some other manner.

Joining module 712 may include OCR module 714, language processing module 716 and telemetry module 718. OCR module 714 is configured to perform OCR on an image, where the results of the OCR of an image is text corresponding to that image.

Language processing module 716 may be configured to perform language processing (e.g., natural language processing) techniques to analyse how, and if, text is to be joined. For example, overlapping text (e.g., words, phrases, portions of words or phrases, numbers, etc.) in the text obtained from different images may be used to determine which texts should be joined and where these texts should be joined. In a similar manner to how predictive text on mobiles works (e.g., using an appropriate language database) language processing module 716 determines a probability of a match between two texts by analysing the likelihood of one text following another text.

Telemetry module 718 is configured to receive or determine motion and direction data (collectively motion data) associated with images received at joining module. Telemetry module 718 utilizes motion data received directly from motion detection module 736 in conjunction with an image.

Joining module 712 is thus configured to receive a set of images associated with a document along with motion data associated with the images from motion detection module 736. Joining module 712 is further configured to provide such images to OCR module 714 to obtain text associated with each of the images. Joining module 712 may then be configured to use language processing module 716 to determine which of the texts to join (if any) and where to join the text. Joining module 712 uses motion data from telemetry module 718 corresponding to the images from which the texts were obtained to determine which of the text to join or where to joining the texts.

Search module 712 is thus configured to be activated and to access image capture module 734 to obtain images (e.g., image data) from image capture module 734 and provide these images to interface 713 to be presented to the user. Search module 712 is also configured to receive an indication that a user wishes to perform a search based on the document (e.g., as the user moves his device 710 over the document). The search module 712 is thus configured to provide multiple images to joining module 750, receive the overall text associated with the multiple images from the joining module 750, provide the text to search term module 717, receive the search terms from search term module 717, use interface 713 to provide the search terms to search module 726, receive the results of the search from interface 713 and present the results of the search using interface 713.

Accordingly, a user of computing device 710 may wish to perform a search of documents 724 and activate search module 712 on computing device 710. Search module 712 then activates image capture module 734 on the device 710 and presents the image begin received by image capture module 734 to the user through interface 713. The user may then move the device 710 over the document. At a certain interval then, the search module 112 captures multiple images received from image capture module 734.

Search module 712 then provides these multiple images to joining module 750 which may then OCR on each of these images top determine text for each of these images and determine if and where these text should be joined and join the texts accordingly to generate a single overall text. The single overall text is provided to search module 712. Search module 712 then determines a set of search terms from the single overall text.

Once the set of search terms are determined, search module 712 may use interface 713 to provide these search terms to search interface 728 of search module 726 of content provisioning module 722. For example, the search terms may be provided to the search module 726 through search interface 728 using an API or web services interface provided by search interface 728. Search module 726 may then utilize the provided search terms to search the documents 724 to obtain a set of search results, where the search results are associated with documents 724 responsive to the search. These results may be returned to interface 713 through search interface 728 of search module 726 (e.g., in response to the API or web services call received from interface 713.

When the results are received by interface 713 they are presented to the user at the device 710. For example, a list of the titles or links to each document returned as a search result (or a subset thereof)may be presented allowing a user to select the title and view the corresponding document (e.g., by accessing the document stored on device 710 or by accessing content provisioning module 720 with an identifier of the desired document, etc.).

Furthermore, the term "or" as used herein is generally intended to mean "and/or" unless otherwise indicated. As used herein, a term preceded by "a" or "an" (and "the" when antecedent basis is "a" or "an") includes both singular and plural of such term (i.e., that the reference "a" or "an" clearly indicates only the singular or only the plural). Also, as used in the description herein, the meaning of "in" includes "in" and "on" unless the context clearly dictates otherwise.

Benefits, other advantages, and solutions to problems have been described above with regard to specific embodiments. However, the benefits, advantages, solutions to problems, and any component(s) that may cause any benefit, advantage, or solution to occur or become more pronounced are not to be construed as a critical, required, or essential feature or component.

## Claims

1. A method for document searching, comprising:
capturing (310, 510), by a mobile device moving over a document, a set of images (610a to 610d), wherein each image of the set of images is an image of a different portion of the document;
determining (530) a set of texts by performing (320, 520) optical character recognition (OCR) on each image of the set of images;
using an accelerometer of the mobile device to determine a direction of movement of the mobile device and thus an order of the images in the set of images;
determining an overall text by joining (540) the texts of the set of texts in said order;
determining (330) one or more search terms determined by using the overall text, wherein the one or more search terms comprise key words or phrases from the overall text;
searching (340) a set of documents by using the one or more search terms; and
presenting (350) the set of documents as search result on the mobile device.

2. The method of claim 1, further comprising sending images of the set of images to a content provisioning platform.

3. The method of claim 2, wherein the performing of the OCR on each image of the set of images and the determining of the one or more search terms are done at the content provisioning platform.

4. The method of one of claims 1 to 2, wherein the performing of the OCR on each image of the set of images and the determining of the one or more search terms are done at the mobile device.

5. The method of any one of claims 1 to 4, wherein the searching the set of documents is performed at a content provisioning platform and the set of documents is received as the search result from the content provisioning platform.

6. The method of one of claims 1 to 5, wherein the search result is presented with the set of images.

7. The method of one of the preceding claims, wherein determining the overall text comprises performing natural language processing on the texts of the set of texts.

## Patentansprüche

1. Verfahren zum Suchen von Dokumenten, wobei das Verfahren aufweist:
ein Erfassen (310, 510), durch eine mobile Vorrichtung, die sich über ein Dokument bewegt, eines Satzes von Bildern (610a bis 610d), wobei jedes Bild des Satzes von Bildern ein Bild eines anderen Teils des Dokuments ist;
ein Bestimmen (530) eines Satzes von Texten durch ein Durchführen (320, 520) einer optischen Zeichenerkennung (OCR) an jedem Bild des Satzes von Bildern;
ein Verwenden eines Akzelerators der mobilen Vorrichtung zum Bestimmen einer Richtung der Bewegung der mobilen Vorrichtung und damit einer Reihenfolge der Bilder in dem Satz von Bildern;
ein Bestimmen eines Gesamttextes durch ein Zusammenfügen (540) der Texte des Satzes von Texten in der besagten Reihenfolge;
ein Bestimmen (330) eines Suchbegriffs oder mehrerer Suchbegriffe, die unter Verwendung des Gesamttextes bestimmt werden, wobei der eine Suchbegriff oder die mehreren Suchbegriffe Schlüsselwörter oder Phrasen aus dem Gesamttext aufweist/aufweisen;
ein Suchen (340) eines Satzes von Dokumenten unter Verwendung des einen Suchbegriffs oder der mehreren Suchbegriffe; und
ein Präsentieren (350) des Satzes von Dokumenten als ein Suchergebnis auf der mobilen Vorrichtung.

2. Verfahren nach Anspruch 1, wobei das Verfahren ferner ein Senden von Bildern aus dem Satz von Bildern an eine Plattform zum Bereitstellen von Inhalten aufweist.

3. Verfahren nach Anspruch 2, wobei das Durchführen der OCR an jedem Bild des Satzes von Bildern und das Bestimmen des einen Suchbegriffs oder der mehreren Suchbegriffe auf der Plattform zum Bereitstellen von Inhalten erfolgt.

4. Verfahren nach einem der Ansprüche 1 bis 2, wobei das Durchführen der OCR an jedem Bild des Satzes von Bildern und das Bestimmen des einen Suchbegriffs oder der mehreren Suchbegriffe auf der mobilen Vorrichtung erfolgt.

5. Verfahren nach einem der Ansprüche 1 bis 4, wobei das Suchen (340) des Satzes von Dokumenten auf einer Plattform zum Bereitstellen von Inhalten ausgeführt wird und der Satz von Dokumenten als das Suchergebnis von der Plattform zum Bereitstellen von Inhalten empfangen wird.

6. Verfahren nach einem der Ansprüche 1 bis 5, wobei das Suchergebnis mit dem Satz von Bildern präsentiert wird.

7. Verfahren nach einem der vorstehenden Ansprüche, wobei das Bestimmen des Gesamttextes ein Ausführen einer natürlichen Sprachverarbeitung an den Texten des Satzes von Texten aufweist.

## Revendications

1. Un procédé de recherche de documents, comprenant :
le fait (310, 510), par un dispositif mobile se déplaçant sur un document, de capturer un ensemble d'images (610a à 610d), chaque image de l'ensemble d'images étant une image d'une portion différente du document ;
le fait (530) de déterminer un ensemble de textes en effectuant (320, 520) une reconnaissance optique de caractères (OCR) sur chaque image de l'ensemble d'images ;
le fait d'utiliser un accéléromètre de l'appareil mobile pour déterminer un sens de déplacement de l'appareil mobile et donc un ordre des images dans l'ensemble d'images ;
le fait de déterminer un texte global en joignant (540) les textes de l'ensemble de textes dans ledit ordre ;
le fait (330) de déterminer un ou plusieurs termes de recherche déterminés en utilisant le texte global, le ou les termes de recherche comprenant des mots ou expressions clés du texte global ;
le fait (340) de rechercher un ensemble de documents en utilisant le ou les termes de recherche ; et
le fait (350) de présenter l'ensemble de documents comme résultat de recherche sur l'appareil mobile.

2. Le procédé selon la revendication 1, comprenant en outre le fait d'envoyer des images de l'ensemble d'images à une plateforme de fourniture de contenu.

3. Le procédé selon la revendication 2, dans lequel la réalisation de l'OCR sur chaque image de l'ensemble d'images et la détermination du ou des termes de recherche sont effectuées au niveau de la plateforme de provisionnement de contenu.

4. Le procédé selon l'une des revendications 1 à 2, dans lequel la réalisation de l'OCR sur chaque image de l'ensemble d'images et la détermination du ou des termes de recherche sont effectuées au niveau du dispositif mobile.

5. Le procédé selon l'une quelconque des revendications 1 à 4, dans lequel la recherche de l'ensemble de documents est effectuée au niveau d'une plate-forme d'approvisionnement de contenu et l'ensemble de documents est reçu en tant que résultat de recherche depuis la plate-forme d'approvisionnement de contenu.

6. Le procédé selon l'une des revendications 1 à 5, dans lequel le résultat de recherche est présenté avec l'ensemble d'images.

7. Le procédé selon l'une des revendications précédentes, dans lequel la détermination du texte global comprend la réalisation d'un traitement de langage naturel sur les textes de l'ensemble de textes.
